# EUROPEAN PATENT APPLICATION

(11) **EP 0 829 388 A2**
(43) Date of publication of application: **18.03.1998**
(21) Application number: 97115869.6
(22) Date of filing: 12.09.1997
(51) Int. Cl.: B60K 26/02

(54) **Control device for a vehicle accelerator**

(30) Priority: 13.09.1996 IT VE960032
(71) Applicant: FADIEL ITALIANA S.R.L., 30020 Marcon Venezia (IT)
(72) Inventor: Domeneghini, Fabio, 30020 - S. Liberale Di Marcon (IT)
(74) Representative: Piovesana, Paolo

(57) **Abstract**

A control device for a vehicle accelerator, characterised by comprising:
- a position transducer (26), the movable element of which is coordinated with the movement of a control member (2),
- an electronic control unit (30) associated with said transducer for controlling a stepping motor (36), the shaft of which, when rotated, causes axial movement of an actuator (46) connected to the accelerator control (47).

## Description

This invention relates to a control device for a vehicle accelerator, particularly of a motor vehicle for handicapped persons.

In motor vehicles the accelerator is controlled by a pedal operable by the driver's foot. However in the case of handicapped persons without the use of one or both legs, this controls system cannot be utilized, and hand-operated systems have to be used instead.

A known manual accelerator control device involves the use of a rigid auxiliary ring positioned concentrically in front of the steering wheel and movable axially to it. This auxiliary ring is guided by two pins positioned parallel to the steering column, and arranged to control, during their movement, another ring positioned below the steering wheel and able to mechanically operate the accelerator pedal via a rod.

As the steering wheel and the two auxiliary rings form a single unit, converting a normal vehicle into a vehicle with manual accelerator control also involves the replacement of the steering wheel normally provided with the vehicle.

A further drawback is the danger represented by the rod in the case of sudden collision, particularly taking account of the greater difficulty experienced by a handicapped person in facing sudden sharp impacts.

A further drawback is that the two pins which guide the two auxiliary rings relative to the steering wheel have to be sufficiently close to the steering column to prevent sticking of the ring movements, this close arrangement of the two pins excluding the possibility of fitting an air bag to the steering wheel.

A further drawback is the need to position the steering wheel at only about 4-5 cm from the driver, this requiring modification of the driving inclination provided by the designer and manufacturer.

A manual control device for a vehicle accelerator is also known comprising a rigid annular portion concentric to the steering wheel, and a plurality of segments each rigid with a rod hinged to the rigid annular portion and connected to the rod of all the other segments, in such a manner as to provide synchronization of their movements. One of the segments is associated with a potentiometer connected to a control unit for a direct current electric motor which operates the accelerator via a metal cable.

A drawback of this arrangement is the poor operational reliability due to the presence of the flexible metal cable.

A further drawback is the impossibility of fine adjustment.

These drawbacks are eliminated according to the invention by a manual accelerator control device in a motor vehicle, as described in claim 1.

A preferred embodiment of the present invention is further described hereinafter with reference to the accompanying drawings, in which:

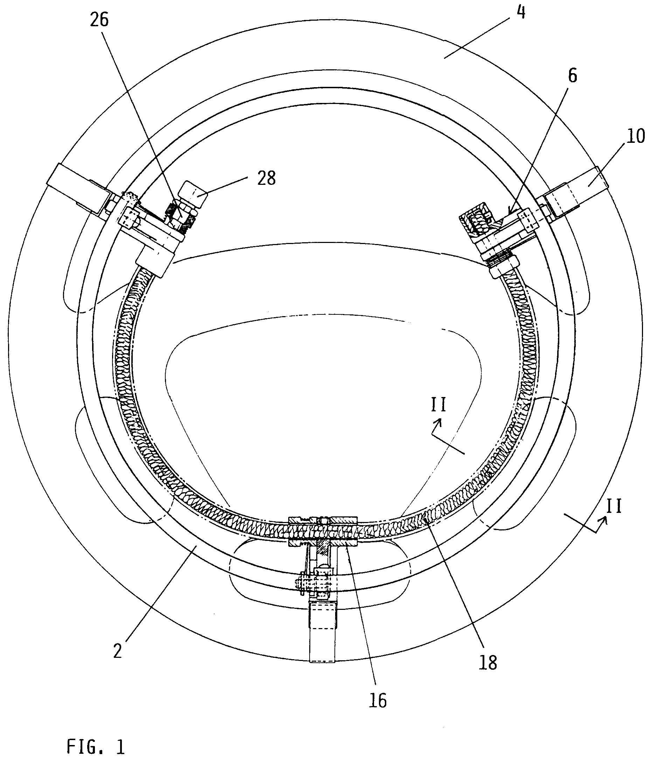

- Figure 1: is a front view of a manual control device according to the invention applied to the steering wheel of a motor vehicle;

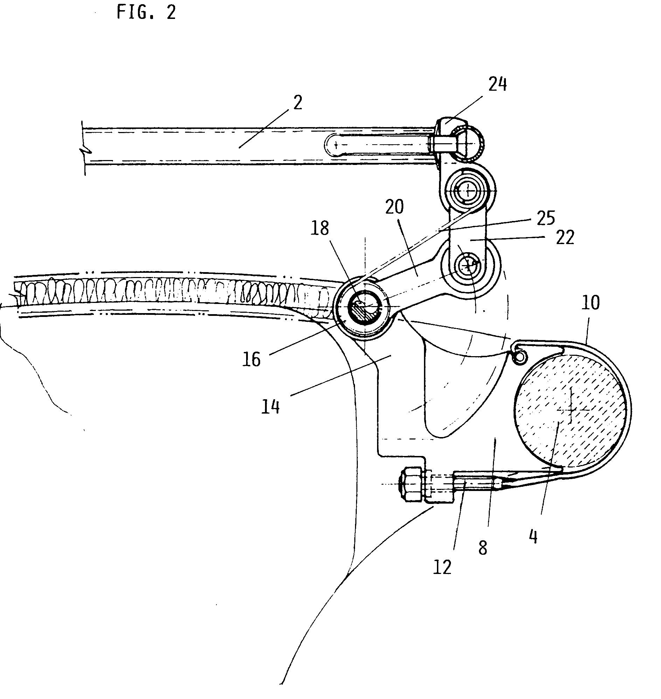

- Figure 2: is a partial section therethrough on the line II-II of Figure 1;

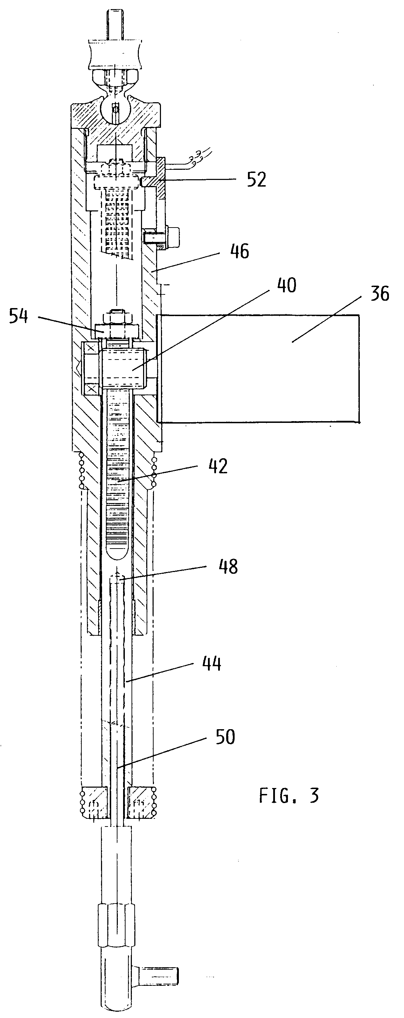

- Figure 3: is a longitudinal section through the control actuator for the accelerator pedal;

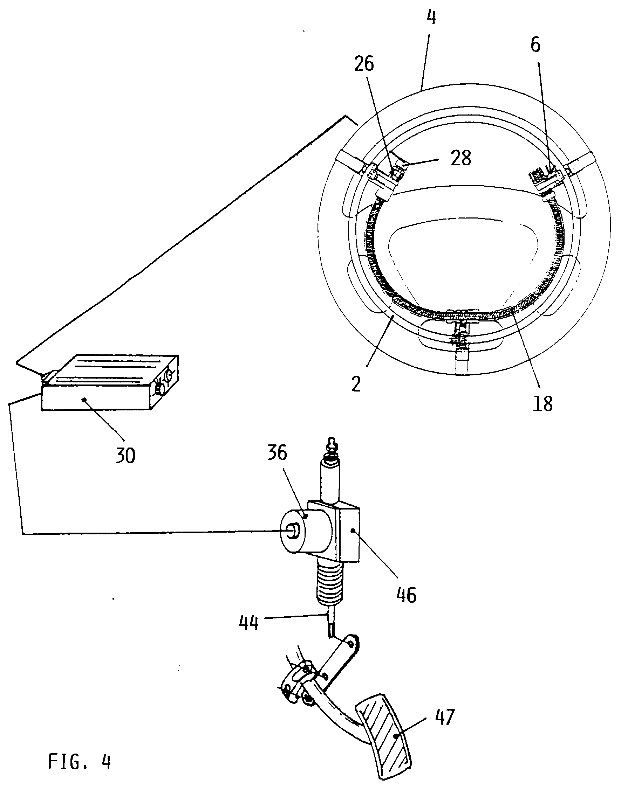

- Figure 4: is a schematic view showing the functional connection of the device within the vehicle; and

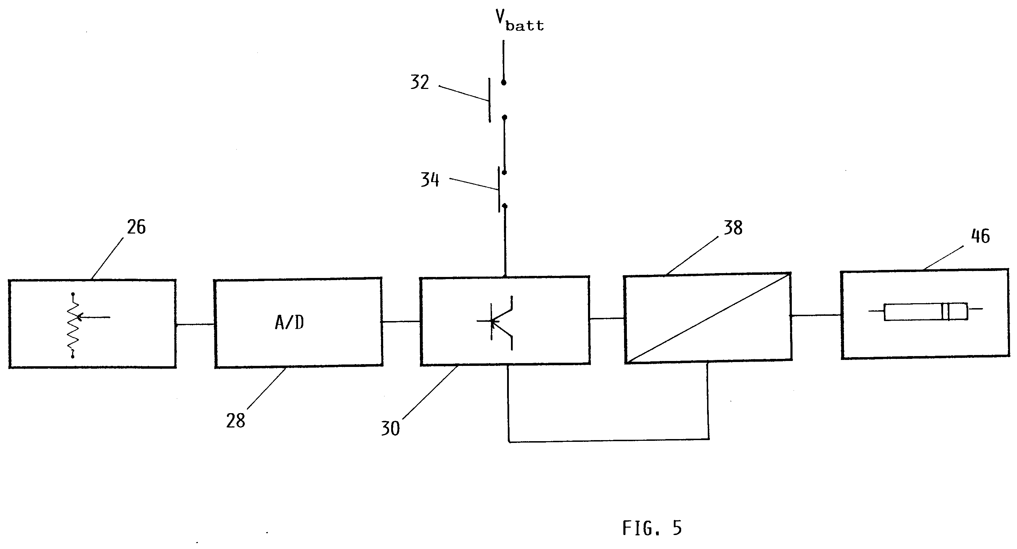

- Figure 5: shows the block diagram of that part of the device downstream of the potentiometer.

As can be seen from the figures, the manual control device of the invention is applied to a control member mounted for example on the vehicle steering wheel. Other control members could be used, but must act on a position transducer, for example a potentiometer, the movable element of which is coordinated with the movements of said control member.

Specifically, said control member comprises a rigid ring 2 fixed to the vehicle steering wheel 4 by clamps 6, of which three are provided in the illustrated example. Each clamp 6 comprises a block or body 8, with a concave seat complementary to the convex surface of the steering wheel 4, and a pulling element 10 associated with a screw 12 for embracing the steering wheel and retaining it adhering to said concave seat.

The body 8 of each clamp 6 is provided with an appendix 14 traversed by a transverse hole for the passage of a bush 16 supporting a flexible element 18 consisting of a steel cable comprising several strands plaited together. The flexible element, which possesses torsional rigidity, is fixed to each of the bushes 16 and can rotate with these relative to the clamps 6.

With each bush 16 there is rigid an arm 20, to the other end of which there is hinged a further arm 22 carrying, hinged to its other end, a fixing member 24 for the rigid ring 2. The articulated joints between all the relatively moving members are preferably in the form of ball joints, which provide considerable movement reliability.

A springs 25, interposed between each bush 16 and the corresponding fixing member 24, maintains the ring 2 elastically spaced from the steering wheel to an extent predetermined by the counteraction between limit stop elements provided between the mutually moving parts, but not shown on the drawings.

To the interior of one of the two clamps 6 positioned at one end of the flexible element 18 there is applied a potentiometer 26 arranged to provide as output a voltage Vₚ between two end values V₁ and V₂ (0 < V₁ ≤ Vₚ ≤ V₂ < V_{barr)} corresponding to the positions of minimum and maximum approach of the rigid ring 2 to the steering wheel 4. An analog-digital converter 28 is connected to the potentiometer 26 to convert the analog voltage signal leaving the potentiometer to a digital signal, practically insensitive to external disturbances, for operating a control unit 30.

The analog-digital converter 28 consists of an electronic card connected to the control unit 30 via the same connections as those provided in any motor vehicle for transmitting the horn activation command or other commands given from the steering wheel. In this manner all the commands given from the steering wheel 2 can be discriminated by the electronic card of the converter 28, which digitizes them and transmits them in the form of different digital signals to the control unit 30, for suitable processing by this latter. Thus for example the horn command signal is fed to the horn, the voltage signal generated by the potentiometer 26 is processed and converted into an accelerator command signal, the volume or tone adjustment signal is fed to the car radio etc..

The control unit 30 is powered by the vehicle battery via a general switch 32, the analog-digital converter 28 being powered by the control unit 30 via those connections used for signal transmission.

A normally closed contact of the switch controlled by the brake pedal for operating the stop light is preferably connected between the general switch 32 and the control unit 30.

The control unit 30 comprises a microprocessor which oversees and controls the entire operation of the device, and powers a stepping motor 36 via the contacts of a relay 38 controlled by the control unit 30, as will be clear from the description of operation.

The same relay can also be connected to other control members separate from the control unit 30, to be activated by these in accordance with the predetermined program of action.

On the shaft of the stepping motor 36 there is mounted a pinion 40 engaging a rack 42 provided on the stem 44 of an actuator 46, which acts directly on the accelerator pedal 42.

At the end which emerges from the actuator 46, the stem 44 comprises an axial cavity 48 in which a rod 50 constituting the member directly connected to the accelerator pedal 47 is housed and can slide freely in an axial direction.

To the body of the actuator 46 there is also applied an optical sensor 52 able to sense the presence of a washer 54 provided at the end of the stem 44 housed in the actuator 46, and to signal the control unit 30 when the stem 44 is totally retracted within the actuator 46.

As an alternative to the cable connection between the potentiometer 26 and the control unit 30, this connection can be of non-wire type, for example using infrared signals.

The device according to the invention operates as follows:
in the absence of external forces the springs 25 maintain the rigid ring 2 at its greatest distance from the steering wheel 4, and the angular position of the flexible element 18, corresponding to this greatest distance position, maintains the potentiometer 26 in a condition such that its output voltage has the value V₂.

The digitized signal provided by the analog-digital converter 28 for this voltage value V₂ is processed by the microprocessor of the control unit 30 which provides no command signal to the stepping motor 36, which maintains the stem 44 in the retracted position, and hence the accelerator pedal 47 in the deactivated condition.

If the driver now presses at any point of the rigid ring 2 towards the steering wheel 4, this movement is transmitted via the articulated arms 20, 22 of the three clamps 6 to the flexible element 18, which because of its torsional rigidity ensures that the approach movement of said ring 2 towards the steering wheel 4 is purely translational.

At the same time the axial rotation of the flexible element consequent on this translational movement of the ring 2 operates the potentiometer, which provides an output voltage Vₚ (V₁ < Vₚ < V₂). This analog voltage signal Vₚ is converted by the analog-digital converter 28 into a digital signal, which is fed to the control unit 30. Here it is processed by the control unit microprocessor transformed into a train command pulses for the stepping motor 36. This rotates the pinion 40 to cause axial movement of the stem 44 in the sense of operating the accelerator pedal 47.

The sizes concerned are chosen so that at the voltage V₁ the pulse train generated by the control unit 30 is such as to move the accelerator pedal to its active end-of-travel position.

The microprocessor of the control unit 30 also performs the function of memorizing the number of pulses fed to the stepping motor 36, so that when the driver releases the rigid ring 2, the elastic reaction of the no-longer stressed springs 25, returns the ring to its rest position at its greatest distance from the steering wheel 4, in which the potentiometer 26 provides the output voltage V₂. Passage to this voltage results in the generation of a train of an equal number of pulses of opposite sing, to return the actuator 40 to its rest state, with the accelerator pedal 47 deactivated. This state corresponds to the sensing of the correct position of the washer 54 by the optical sensor 52. If, for any reason, on termination of the return pulse train the stem 44 of the actuator 46 has not yet attained its completely retracted position, the optical sensor 52 senses this and causes the control unit 30 to generate further pulses until the actuator 46 has reached its rest position.

The microprocessor of the control unit 30 is designed to provide correct operation of the device under conditions of absolute safety, and to act adequately in all cases of malfunction.

Thus for example, in the case of accidental disconnection of one of the potentiometer wires, the voltage signal at the microprocessor input moves to the value V₂, corresponding to the rest condition of the accelerator pedal 47, this condition also being assumed in the case of lack of power to the control unit 30, because of the return spring generally present in the accelerator pedal, and the possible presence of a additional spring with which the stem 44 of the actuator 46 can be provided.

In the case of accidental contact between the two potentiometer wires, the voltage at the microprocessor input is zero, ie is outside the range of values V₁-V₂, within which the microprocessor of the control unit 30 operates correctly. Consequently the microprocessor acts on the relay 38 to interrupt the electrical connection between the control unit and the actuator 46.

As stated, the relay 38 can be also activated on command by control members other than the control unit, to indicate malfunction situations of situations making it advisable to deactivate the accelerator control. These situations could be for example the presence of an open door, braking etc.. Relative to braking, in series with the general switch 32 of the control unit 30 there is connected a normally closed contact 34 which opens each time the vehicle is braked, removing power from the control unit and hence automatically bringing the accelerator pedal 47 into its rest state.

The existence of this manual control for the accelerator pedal 47 does not however mean that the pedal cannot be operated by the driver's foot. In this respect, foot operation causes the rod 50 to slide relative to the stem 44, its return to the rest position being effected by the return springs with which the accelerator pedal is normally provided.

From the aforegoing it is apparent that the device of the invention has numerous advantages, and in particular:
- it provides a wide range of adjustment of the accelerator travel,
- it is highly reliable,
- it allows fine adjustment to be made,
- it can be installed practically on any motor vehicle without excluding the facility for operating the accelerator pedal in the traditional manner with the foot,
- it is applicable to any steering wheel, even one provided with an air bag,
- it uses only one type of clamp for positioning the rigid ring 2 at the correct distance from the steering wheel 4,
- there is no hindrance to the operation of any controls provided on the steering wheel,
- it enables the active travel of the rigid ring to be adjusted.

## Claims

1. A control device for a vehicle accelerator, characterised by comprising;
- a position transducer (26), the movable element of which is coordinated with the movement of a control member (2),
- an electronic control unit associated with said transducer for controlling a stepping motor, the shaft of which, when rotated, causes axial movement of an actuator connected to the accelerator control.

2. A device as claimed in claim 1, characterised in that on the shaft of the stepping motor (36) there is mounted a pinion (40) coupled to a rack (42) formed on the stem (44) of an actuator (46) which acts on the accelerator control (47).

3. A device as claimed in claim 2, characterised in that the stem (44) comprises, at that end emerging from the actuator (46), an axial cavity (48) in which a rod (50) connected to the accelerator control (47) is housed and can slide freely in an axial direction.

4. A device as claimed in claim 2, characterised in that a sensor (52) for sensing that position of the stem (44) corresponding to the rest condition of the actuator is applied to the body of the actuator (46).

5. A device as claimed in claim 1, characterised in that the control unit (30) is connected to the electrical supply of the vehicle via a normally closed contact (34) of a switch operated by the brake pedal to light the stop light.

6. A device as claimed in claim 1, characterised in that the position transducer (26) is arranged to provide an output voltage (Vₚ) lying between two end values (V₁ <Vₚ < V₂) which lie between the earth and the battery voltage, the lesser voltage (V₁) corresponding to the condition of maximum activation of the actuator, the greater voltage (V₂) corresponding to the actuator rest condition.

7. A device as claimed in claim 4, characterised in that the control unit (30) comprises a pulse generator for controlling the stepping motor (36), a circuit for memorizing the number of pulses which at each intervention are transmitted to said actuator (46), and a circuit for generating an equal number of pulses of opposite sign for returning the actuator to rest.

8. A device as claimed in claims 4 and 7, characterised by comprising a circuit for deactivating the signal for halting said generator of pulses of opposite sign until said sensor (52) senses the rest condition of said actuator (46).

9. A device as claimed in claim 6, characterised in that the control unit (30) is provided with means for monitoring the correct operation of the potentiometer (26) between the assigned limiting values (V₁,V₂) and for deactivating the actuator (46) if the potentiometer output voltage (Vₚ) is outside said limiting value.

10. A device as claimed in claim 1, characterised by comprising a switch (38) interposed between the control unit (30) and the actuator (46) and operated by the control unit on sensing malfunction conditions.

11. A device as claimed in claim 1, characterised in that the position transducer (26) is a potentiometer.

12. A device as claimed in claim 1, characterised in that the control member (2) is applied to the steering wheel (4) of a motor vehicle.

13. A device as claimed in claim 1, characterised in that the actuator (46) is connected to the accelerator control pedal (47).

14. A device as claimed in claim 10, characterised in that the switch (38) is controlled by a multi-input circuit, the inputs of which are connected to different sensors for sensing malfunction conditions.

15. A device as claimed in claim 12, characterised in that the control member is fitted to the steering wheel by a plurality of clamps (6) provided with an appendix (14) comprising a transverse through hole, a longitudinally flexible but torsionally rigid element (18) passing through the transverse hole of all said appendices.

16. A device as claimed in claim 15, characterised by comprising a bush (16) housed in the hole of each appendix (14) and free to rotate within said through hole.

17. A device as claimed in claim 15, characterised in that each clamp (6) comprises a concave portion and a pulling element (10) for maintaining the vehicle steering wheel (4) adhering to said concave portion.

18. A device as claimed in claim 17, characterised in that each clamp (6) is provided with a screw means (12) acting on said pulling element (10).

19. A device as claimed in claim 16, characterised in that with each bush (16) there is rigid a first arm (20), in which there is hinged a second arm (22), to which there is hinged a member (24) for fixing the rigid annular element (2).
